# EUROPEAN PATENT APPLICATION

(11) **EP 4 527 741 A1**
(43) Date of publication of application: **26.03.2025**
(21) Application number: 24197878.2
(22) Date of filing: 02.09.2024
(51) Int. Cl.: B64D 13/06

(54) **AIRCRAFT CABIN AIR DISTRIBUTION SYSTEM**

(30) Priority: 21.09.2023 IN 202311063519
(71) Applicant: Airbus SAS, 31700 Blagnac Cedex (FR)
(72) Inventor: KOMARLA, Sasank, Bristol, BS34 7PA (GB)
(74) Representative: Ribeiro, James Michael

(57) **Abstract**

An aircraft (1) cabin (10) air distribution system with a fuselage (2), a cabin (10) in the fuselage (2), a supply duct (130, 30C, 30, 40), and a plurality of outlets (62) configured to feed air into the cabin (10). The outlets (62) include upper outlets (62) positioned at a higher level than the supply duct (130, 30C, 30, 40), and lower outlets (64) positioned at a lower level than the supply duct (130, 30C, 30, 40). The aircraft (1) cabin (10) air distribution system also includes a plurality of branch ducts (52) configured to feed air from the supply duct (130, 30C, 30, 40) to the outlets (62), wherein each branch duct (52) meets the supply duct (130, 30C, 30, 40) at a respective junction. The branch ducts (52) include upper branch ducts (52) which each feed air to one or more of the upper outlets (62) and lower branch ducts (54) which each feed air to one or more of the lower outlets (64).

## Description

### FIELD OF THE INVENTION

The present invention relates to an aircraft cabin air distribution system and a method of feeding air into a cabin of a fuselage.

### BACKGROUND OF THE INVENTION

Conventional aircraft cabin air distribution systems supply air from main supply ducts to outlets via a large number of riser ducts. This can result in large pressure losses, due to the large number of riser duct junctions, and the frictional pressure losses caused by the length of ducting. As a result, large diameter supply ducts are required to provide high mass flow rates, and a high pressure air supply is required to overcome the pressure losses.

### SUMMARY OF THE INVENTION

A first aspect of the invention provides an aircraft cabin air distribution system comprising a fuselage, a cabin in the fuselage, a supply duct, a plurality of outlets configured to feed air into the cabin, the outlets comprising: upper outlets positioned at a higher level than the supply duct and lower outlets positioned at a lower level than the supply duct; and a plurality of branch ducts configured to feed air from the supply duct to the outlets; wherein each branch duct meets the supply duct at a respective junction, and the branch ducts comprise: upper branch ducts which each feed air to one or more of the upper outlets and lower branch ducts which each feed air to one or more of the lower outlets.

Optionally, each junction of an upper branch duct is arranged opposite a junction of a lower branch duct.

Optionally, each branch duct meets the supply duct at a 90° angle at a respective junction.

Optionally, each outlet comprises a plenum chamber with a plurality of slots in fluid communication with the cabin to feed air into the cabin.

Optionally, each branch duct has a diameter smaller than a diameter of the supply duct.

Optionally, the cabin comprises a plurality of overhead bins, the upper outlets are positioned at a higher level than the overhead bins and the lower outlets are positioned at a lower level than the overhead bins.

Optionally, the aircraft cabin air distribution system further comprises an air supply unit; and one or more riser ducts for feeding air from the air supply unit to the supply duct. The (or each) riser duct may extend in a circumferential direction.

Optionally, the supply duct is fed with air from the air supply unit by only a single riser duct, or by only a pair of riser ducts, or by only three riser ducts.

Optionally, the supply duct is a first supply duct, and the system further comprises a second supply duct, a plurality of second outlets configured to feed air into the cabin, the second outlets comprising: upper second outlets positioned at a higher level than the second supply duct and lower second outlets positioned at a lower level than the second supply duct, and a plurality of second branch ducts configured to feed air from the second supply duct to the second outlets, wherein each second branch duct meets the second supply duct at a respective junction, and the second branch ducts comprise: upper second branch ducts which each feed air to one or more of the upper second outlets and lower second branch ducts which each feed air to one or more of the lower second outlets.

Optionally, the first supply duct is on a port side of the fuselage and the second supply duct is on a starboard side of the fuselage.

Optionally, the first supply duct and the second supply duct are on the same side of the fuselage.

Optionally, the aircraft cabin air distribution system further comprises an air supply unit, one or more first riser ducts for feeding air from the air supply unit to the first supply duct, and one or more second riser ducts for feeding air from the air supply unit to the second supply duct.

Optionally, the fuselage comprises a cabin floor; and the air supply unit is positioned outside the cabin and below the cabin floor.

Optionally, the cabin is pressurised; and the air supply unit is positioned in an unpressurised part of the fuselage.

Optionally, the air supply unit comprises a mixer unit configured to receive and mix air from plural sources.

Optionally, the (or each) supply duct extends in a longitudinal direction of the fuselage.

A further aspect of the invention provides an aircraft comprising the aircraft cabin air distribution system of the first aspect.

A further aspect of the invention provides a method of feeding air into a cabin of a fuselage with an aircraft cabin air distribution system according to the first aspect, the method comprising feeding air from the supply duct to the outlets via the supply ducts and their respective junctions; and feeding the air into the cabin from the outlets.

### BRIEF DESCRIPTION OF THE DRAWINGS

Embodiments of the invention will now be described with reference to the accompanying drawings, in which:
Figure 1 shows a plan view of an aircraft;
Figure 2 shows a cross-sectional view of a fuselage of the aircraft of Figure 1;
Figure 3 shows a schematic overview of an exemplary cabin air distribution system;
Figure 4 shows a perspective schematic view of the fuselage of the aircraft of Figure 1;
Figure 5 shows a schematic view of an exemplary duct arrangement;
Figure 6 shows the outlets in detail; and
Figure 7 shows a perspective schematic view of the fuselage of the aircraft of Figure 1 with a multi-zone air distribution system.

### DETAILED DESCRIPTION OF EMBODIMENT(S)

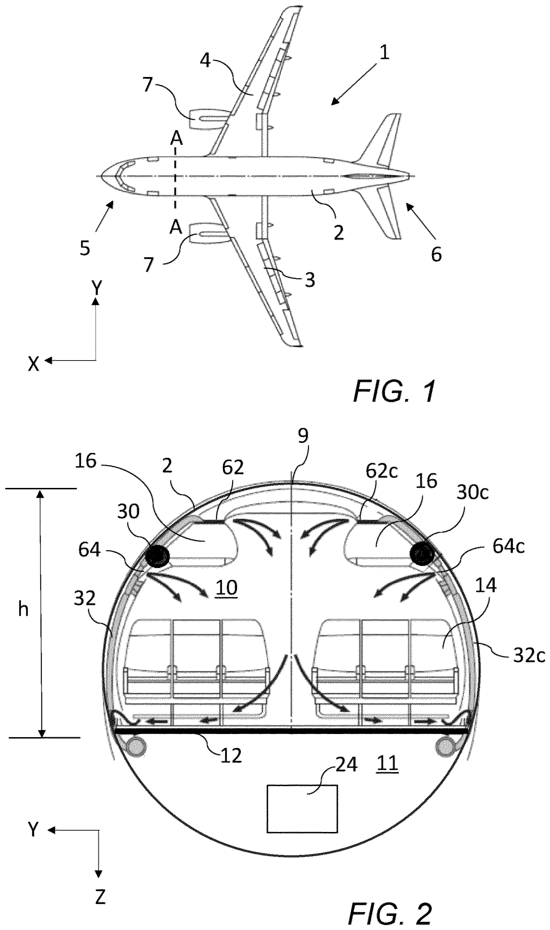

An aircraft 1 is shown in Figure 1 and comprises a fuselage 2 and a pair of port and starboard fixed wings 3, 4. The aircraft 1 has a nose end 5 at a forward end of the aircraft, and a tail end 6 at a rearward end. Engines 7 are mounted to each wing 3,4.

The XYZ axes shown in Figures 1 and 2 represent a reference frame of the aircraft 1. The X-axis is a longitudinal axis defining an X-direction of the aircraft; the Y-axis is a lateral axis defining a Y-direction of the aircraft, and the Z-axis is a vertical axis defining a Z-direction of the aircraft.

Figure 2 shows a cross-sectional view of the fuselage 2 along a line A-A in Figure 1. The fuselage 2 is generally tubular and extends from the nose end 5 of the aircraft 1 to the tail end 6. The fuselage 2 comprises a cabin 10. The cabin 10 is a pressurised enclosed space within the fuselage 2, bounded by a cabin floor 12.

The cabin 10 is a passenger cabin containing seats 14 and overhead bins 16. The overhead bins 16 are positioned above the seats 14 and the cabin floor 12 and provide luggage storage. The seats 14 are positioned above and secured to the cabin floor 12. The cabin floor 12 extends along the entire length of the cabin 10 and defines a lower boundary of the cabin 10. The cabin 10 has a height h that extends from the cabin floor 12 to an apex 9 at the top of the cabin 10. In this example, only six seats 14 and two overhead bins 16 are shown, however, it will be understood that any number and/or arrangement of seats 14 and/or overhead bins 16 may be in the cabin.

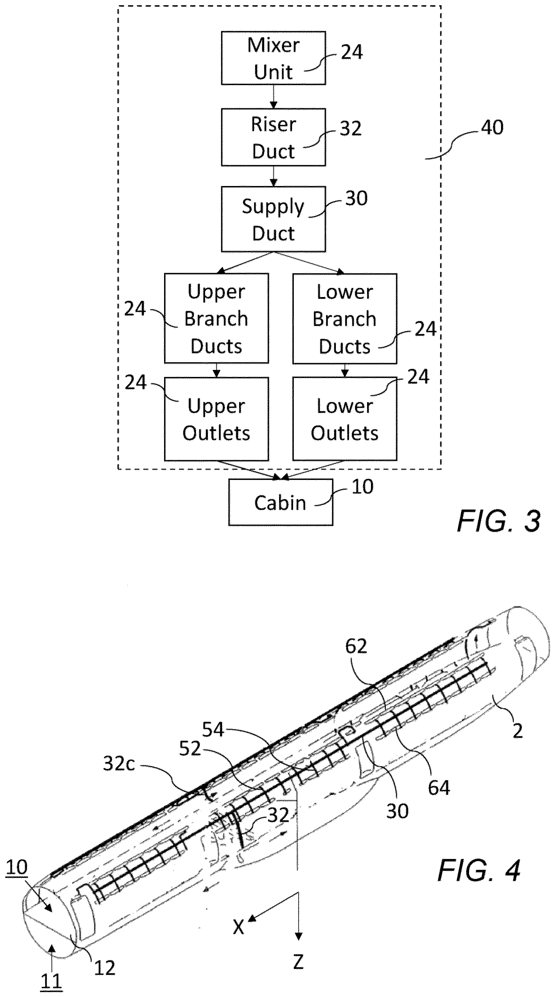

The aircraft 1 comprises a cabin air distribution system 40 that is arranged to feed air into the cabin 10 and shown schematically in Figure 3.

The air distribution system 40 includes a supply duct 30 that is arranged to receive air from a mixer unit 24 via a riser duct 32. The mixer unit 24 is configured to receive and mix air from plural sources, including one or more of bleed air from the engines 7, recirculated air from the cabin 10, and atmospheric ram air received from outside the aircraft 1. In other embodiments, the supply duct 30 may be arranged to receive air from an air supply unit which is not a mixer unit.

The mixer unit 24 provides air to the supply duct 30 that is then supplied to the cabin 10. As shown more clearly in Figure 2, the mixer unit 24 is in an unpressurised lower baggage compartment 11 that is underneath the cabin floor 12.

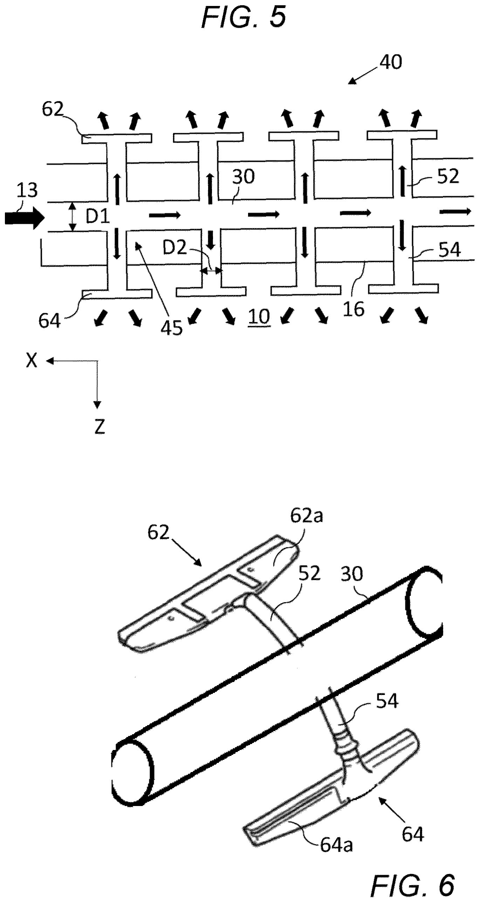

Figure 4 shows a perspective schematic view of the fuselage 2 and the cabin air distribution system 40. As shown, the supply duct 30 extends in the X-direction along the fuselage 2 and has a diameter D1 (shown in Figure 5). As shown in Figure 2, the supply duct 30 is positioned adjacent to the overhead bins 16. In this position, the supply duct 30 does not occupy a large volume of space inside the cabin 10 that may be required for the seats 14 or other systems. In other examples, the supply duct 30 may be positioned below the overhead bins 16 or above the overhead bins 16. Preferably, the supply duct 30 is positioned in the upper half of the cabin (i.e. in the upper half of the height h of the cabin 10).

The supply duct 30 receives air from the mixer unit 24 through a riser duct 32, shown in Figures 2 and 4. The riser duct 32 is coupled to the mixer unit 24 and the supply duct 30 so that air from the mixer unit 24 is delivered to the supply duct 30 via the riser duct 32. As shown in Figure 2, the riser duct 32 extends circumferentially around an inner side of the fuselage 2, the circumferential direction being conventionally known as a "framewise" direction. In this example, only one riser duct 32 is shown in fluid communication with the supply duct 30. However, multiple riser ducts 32 may couple the mixer unit 24 to the supply duct 30.

Coupling multiple riser ducts 32 to the supply duct 30 helps to reduce the mass flow rate of air passing through the riser ducts 32 and into the supply duct 30. This arrangement therefore reduces the acoustic noise in each supply duct 30. On the other hand, minimising the number of riser ducts is advantageous since it reduces the overall weight of the system. Preferably the supply duct 30 is fed with air by fewer than five riser ducts.

In the example of Figures 2 and 4 a supply duct 30, riser duct 32 and associated outlets 62, 64 are provided on a port side of the cabin, and an identical system with a supply duct 30c, riser duct 32c and associated outlets 62c, 64c is provided on a starboard side of the cabin. Each riser duct 32, 32c may be supplied by the same mixer unit 24.

Figure 5 is a schematic view of the cabin air distribution system 40 on the port side of the cabin. The ducting arrangement shown includes the supply duct 30, a plurality of branch ducts 52, 54 and a plurality of outlets 62, 64. The supply duct 30 is arranged to deliver air to the cabin 10 through the branch ducts 52, 54 and outlets 62, 64. The flow of air is indicated by arrows 13.

The outlets comprise upper outlets 62 and lower outlets 64. The terms "upper" and "lower" designate a height level in the XYZ reference frame of the aircraft. Hence the upper outlets 62 are positioned at a higher level (in the Z-direction) than the lower outlets 64 in the reference frame of the aircraft.

As shown in Figures 2 the upper outlets 62 are positioned at a higher level than the supply duct 30 and at a higher level than the overhead bins 16, and the lower outlets 64 are positioned at a lower level than the supply duct 40 and at a lower level than the overhead bins 16.

The branch ducts comprise upper branch ducts 52 and lower branch ducts 54. Again, the terms "upper" and "lower" designate a height level in the XYZ reference frame of the aircraft. Hence the upper branch ducts 52 are positioned at a higher level (in the Z- direction) than the lower branch ducts 54 in the reference frame of the aircraft.

The upper branch ducts 52 each feed air into one of the upper outlets 62. The lower branch ducts 54 each feed air into one of the lower outlets 64. In the example shown in Figure 5, each branch duct feeds air into only a single outlet 62, but in other embodiments each branch duct may feed air into multiple outlets.

Each branch duct 52, 54 meets the supply duct 30 at a respective junction. As shown in Figure 5, each junction is generally T-shaped, with the branch duct 52, 54 meeting the supply duct 30 at a 90° angle at the junction.

In this example, each lower junction of an upper branch duct 52 is arranged opposite a lower junction of a lower branch duct 54. In other embodiments, the upper and lower junctions may be offset from each other in the X-direction, so they are not opposite each other.

Each branch duct has a diameter D2 that is smaller than the diameter D1 of the supply duct 30. This helps minimise any pressure loss of the airflow 13 between the supply duct 30 and the branch ducts 52, 54.

The outlets 62, 64 are shown in more detail in Figure 6. Each outlet 62, 64 comprises a plenum chamber 62a, 64a with a plurality of slots (not shown). The slots are in fluid communication with the cabin 10 so that air flows from the plenum chamber 62a, 64a into the cabin 10 via the slots.

Conventional aircraft cabin air distribution systems supply air from main supply ducts which are positioned at floor level, requiring a large number of circumferentially extending riser ducts.

The cabin air distribution system 40 is advantageous because the supply duct 30 is positioned well above the floor level and near the outlets 62, 64, which may reduce the overall length of ducting required to connect the supply duct 30 to the outlets 62, 64. This reduces frictional pressure losses, so the mixer unit 24 can operate at a lower pressure. It also reduces weight, which reduces fuel burn of the engines 7.

The diameter D1 of the supply duct 30 may also be reduced compared with conventional systems, resulting in a further weight reduction.

The system has a large number of junctions between the branch ducts and the supply duct, but this disadvantage is outweighed by the benefits outlined above.

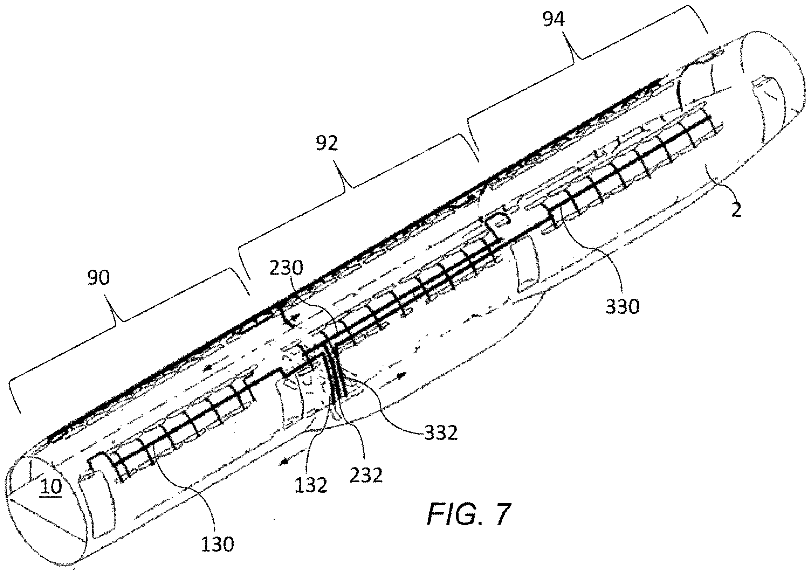

In the example of Figure 7, the cabin 10 has three air distribution zones: a forward zone 90, a central zone 92 and a rearward zone 94. Each zone receives air from a dedicated cabin air distribution system with the same schematic arrangement as the system of Figure 3. The air supplied to the zones 90, 92, 94 may be at different flow rates and/or different temperatures.

Each dedicated cabin air distribution system comprises a supply duct 130, 230, 330 which supplies air to a respective set of outlets via upper and lower branch ducts. The supply ducts 130, 230, 330 are each connected to the mixer unit 24 by a respective riser duct 132, 232, 332. The supply ducts 130, 230, 330 are all on the same (port) side of the fuselage.

Figure 7 shows most clearly the cabin air distribution systems on the port side of the cabin. An identical set of cabin air distribution systems are provided on the starboard side of the cabin.

While three zones are shown in Figure 7, each with a port and starboard supply duct, it will be understood that any number of supply ducts may be used in the fuselage 2.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. An aircraft cabin air distribution system comprising:
a fuselage;
a cabin in the fuselage;
a supply duct;
a plurality of outlets configured to feed air into the cabin, the outlets comprising:
upper outlets positioned at a higher level than the supply duct and lower outlets positioned at a lower level than the supply duct; and
a plurality of branch ducts configured to feed air from the supply duct to the outlets, wherein each branch duct meets the supply duct at a respective junction, and the branch ducts comprise: upper branch ducts which each feed air to one or more of the upper outlets and lower branch ducts which each feed air to one or more of the lower outlets.

2. An aircraft cabin air distribution system according to claim 1, wherein each junction of an upper branch duct is arranged opposite a junction of a lower branch duct.

3. An aircraft cabin air distribution system according to any preceding claim, wherein each branch duct meets the supply duct at a 90° angle at a respective junction.

4. An aircraft cabin air distribution system according to any preceding claim, wherein the cabin comprises a plurality of overhead bins, the upper outlets are positioned at a higher level than the overhead bins and the lower outlets are positioned at a lower level than the overhead bins.

5. An aircraft cabin air distribution system according to any preceding claim, wherein the supply duct is a first supply duct, and the system further comprises:
a second supply duct;
a plurality of second outlets configured to feed air into the cabin, the second outlets comprising: upper second outlets positioned at a higher level than the second supply duct and lower second outlets positioned at a lower level than the second supply duct; and
a plurality of second branch ducts configured to feed air from the second supply duct to the second outlets, wherein each second branch duct meets the second supply duct at a respective junction, and the second branch ducts comprise: upper second branch ducts which each feed air to one or more of the upper second outlets and lower second branch ducts which each feed air to one or more of the lower second outlets.

6. An aircraft cabin air distribution system according to claim 5, wherein the first supply duct is on a port side of the fuselage and the second supply duct is on a starboard side of the fuselage.

7. An aircraft cabin air distribution system according to claim 5, wherein the first supply duct and the second supply duct are on the same side of the fuselage.

8. An aircraft cabin air distribution system according to claim 5, 6 or 7, further comprising an air supply unit; one or more first riser ducts for feeding air from the air supply unit to the first supply duct; and one or more second riser ducts for feeding air from the air supply unit to the second supply duct.

9. An aircraft cabin air distribution system according to any preceding claim, further comprising an air supply unit; and one or more riser ducts for feeding air from the air supply unit to the supply duct.

10. An aircraft cabin air distribution system according to claim 8 or 9, wherein the fuselage comprises a cabin floor; and the air supply unit is positioned outside the cabin and below the cabin floor.

11. An aircraft cabin air distribution system according to claim 8, 9 or 10, wherein the cabin is pressurised; and the air supply unit is positioned in an unpressurised part of the fuselage.

12. An aircraft cabin air distribution system according to any of claims 8 to 11, wherein the air supply unit comprises a mixer unit configured to receive and mix air from plural sources.

13. An aircraft cabin air distribution system according to any preceding claim, wherein the (or each) supply duct extends in a longitudinal direction of the fuselage.

14. An aircraft comprising an aircraft cabin air distribution system according to any preceding claim.

15. A method of feeding air into a cabin of a fuselage with an aircraft cabin air distribution system according to any preceding claim, the method comprising: feeding air from the supply duct to the outlets via the supply ducts and their respective junctions; and feeding the air into the cabin from the outlets.
